# EUROPÄISCHE PATENTSCHRIFT

(11) **EP 2 928 756 B1**
(45) Veröffentlichungstag und Bekanntmachung des Hinweises auf die Patenterteilung: **04.01.2017**
(21) Anmeldenummer: 13795231.3
(22) Anmeldetag: 22.11.2013
(51) Int. Cl.: B62D 25/08

(54) **FRONTENDKAROSSERIE**
FRONT-END BODY
CARROSSERIE AVANT

(30) Priorität: 07.12.2012 DE 102012222561
(43) Veröffentlichungstag der Anmeldung: 14.10.2015
(73) Patentinhaber: Bayerische Motoren Werke Aktiengesellschaft, 80809 München (DE)
(72) Erfinder: RIEDL, Wilhelm, 85276 Pfaffenhofen (DE); KÖHLER, Uwe, 85241 Hebertshausen (DE)
(86) Internationale Anmeldenummer: PCT/EP2013/074472
(87) Internationale Veröffentlichungsnummer: WO 2014/086596

(56) Entgegenhaltungen:
- WO-A1-2009/071244
- DE-A1-102011 016 936
- US-A1- 2010 163 324

## Beschreibung

Die Erfindung betrifft eine Frontendkarosserie für den Aufbau eines Frontends eines Kraftfahrzeuges.

Eine Frontendkarosserie zum Aufbau eines Frontends für ein Kraftfahrzeug ist beispielsweise aus dem gattungsgemäßen WO 2009/071244 bekannt. Die darin beschiebene Frontendkarosserie ist in Fig. 7 schematisch zusammen mit einer Basiskarosserie gezeigt.

Die aus dem Stand der Technik bekannte Frontendkarosserie umfasst zwei seitliche Stützelemente S7, S8, die über eine Verbindungsplatte S2 miteinander verbunden sind, wobei die Verbindungsplatte S2 den sich zwischen den Stützelementen befindenden Raum überspannt. Die Stützelemente S7, S8 werden von einem sich am unteren, vorderen Ende der Frontendkarosserie befindenden Crash-System S4 gehaltert.

An einem oberen, vorderen Ende der Verbindungsplatte S2 ist eine V-förmige Strebe befestigt, die zu dem Crash-System S4 verläuft und an diesem befestigt ist.

Die so ausgebildete Frontendkarosserie eignet sich zum Aufbau eines modularen Frontends, das beispielsweise Stoßfänger, Scheinwerfer, Kühlergrill, etc. umfasst.

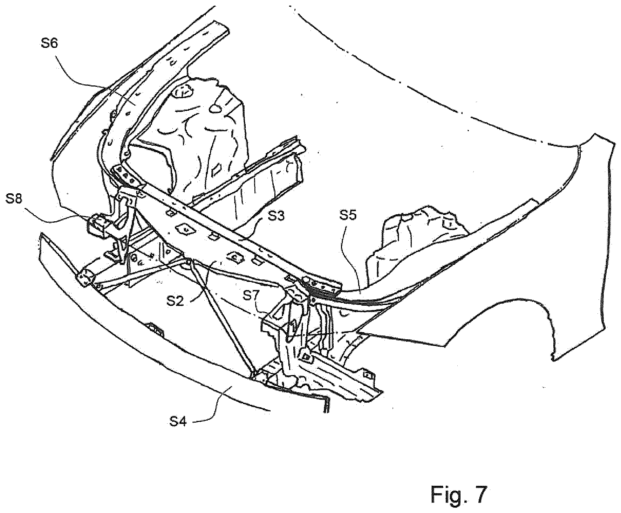

Damit die Frontendkarosserie mit der in Fig. 7 schematisch gezeigten Basiskarosserie verbunden werden kann, wird an der Basiskarosserie eine Querverbindung S3 an den seitlichen Stützträgern S5, S6 derart befestigt, dass sie die in Fahrtrichtung vorderen Enden der Stützträger S5, S6 miteinander verbindet.

Die Frontendkarosserie wird, wie in Fig. 7 gezeigt, an die Basiskarosserie herangeführt und durch Befestigen der Verbindungsplatte S2 an der Querverbindung S3 insgesamt gegenüber der Basiskarosserie ausgerichtet.

In dem sich unter der Verbindungsplatte S2 befindenden Aufnahmeraum ist nach dem Befestigen der Frontendkarosserie bestimmungsgemäß ein in Fig. 7 nicht gezeigtes Kühleraggregat aufgenommen.

Dadurch, dass die Verbindungsplatte S2 den Aufnahmeraum überspannt, ist dieser in Höhenrichtung der Frontendkarosserie durch die Verbindungsplatte S2 begrenzt.

Zum einen wird hierdurch die Montagereihenfolge des Kühleraggregats bzw. der Frontendkarosserie zwingend festgelegt, weil der Aufnahmeraum nach Befestigung des Frontends nicht mehr zugänglich ist. Aus diesem Grund muss das Kühleraggregat vor Befestigung der Frontendkarosserie montiert werden. Wie hieraus verständlich wird, kann anschließend ein reparaturbedingter Austausch des Kühleraggregats nur durch vollständiges Lösen des gesamten Frontends durchgeführt werden.

Zum Anderen lässt sich die bekannte Frontendkarosserie nur bedingt einheitlich für verschiedene Fahrzeugtypen und/oder Baureihen von Fahrzeugen verwenden, da insbesondere die Verbindungsplatte S2 oftmals einer anderen fahrzeugbedingten Ausgestaltung bedarf, was wiederum Anpassungen anderer Elemente der Frontendkarosserie nach sich zieht.

Letztendlich begrenzt die Verbindungsplatte S2 den für das Kühleraggregat zur Verfügung stehenden Aufnahmeraum in Höhenrichtung der Frontendkarosserie auch derart, dass die maximal verwendbare Größe des Kühleraggregats vermindert ist.

Aufgabe der Erfindung ist es, eine verbesserte Frontendkarosserie für den Aufbau eines modularen Frontends zu schaffen, die insbesondere eine flexiblere Einsetzbarkeit und Montage zulässt.

Diese Aufgabe wird mit einer erfindungsgemäßen Frontendkarosserie für den Aufbau eines Frontends eines Kraftfahrzeuges gelöst.

Erfindungsgemäß umfasst die Frontendkarosserie ein erstes seitliches Stützelement und ein zweites seitliches Stützelement, die an einer an einer Basiskarosserie vorgesehenen Referenzstrebe zur Ausrichtung der Frontendkarosserie gegenüber der Basiskarosserie befestigbar sind, eine Querverstrebung, die das erste seitliche Stützelement und das zweite seitliche Stützelement derart verbindet, dass zwischen dem ersten seitlichen Stützelement und dem zweiten seitlichen Stützelement ein in Höhenrichtung der Frontendkarosserie offener Aufnahmeraum zur Aufnahme eines Aggregats, insbesondere eines Kühlers, ausgebildet ist, und ein Stabilitätselement, das einerseits an der Querverstrebung lösbar befestigt ist und andererseits an der Basiskarosserie mittelbar oder unmittelbar befestigt werden kann.

Bei der erfindungsgemäßen Frontendkarosserie handelt es sich insbesondere um eine die Grundstruktur/Grundkonstruktion eines modularen Frontends aufbauenden Karosserie. Das vollständig montierte Frontend bildet insgesamt ein Modul, das die Vorderseite eines Kraftfahrzeuges abschließt und die Außenhaut des Frontbereiches des Kraftfahrzeuges aufbaut bzw. darstellt. Beispielsweise umfasst ein auf der erfindungsgemäßen Frontendkarosserie basierendes Frontend die Scheinwerfer, Stoßfänger, den Kühlergrill, das Motorhaubenschloss etc.

Die Stützelemente bilden insbesondere die seitliche Begrenzung des Aufnahmeraumes und sind derart mit der Querverstrebung verbunden, dass der Aufnahmeraum der Frontendkarosserie in Höhenrichtung offen ist, d.h. die Querverstrebung und die seitlichen Stützelemente umlaufen den Aufnahmeraum lediglich und begrenzen diesen in Höhenrichtung der Frontendkarosserie nicht. Hierdurch lässt sich die erfindungsgemäße Frontendkarosserie unabhängig von der Ausgestaltung des verbauten Kühleraggregates an die Basiskarosserie heranführen und für eine Vielzahl verschiedener Fahrzeugtypen einsetzen.

Weiterhin wird durch die erfindungsgemäße Ausgestaltung der Frontendkarosserie die Montagereihenfolge flexibler. Im Prinzip kann die Frontendkarosserie zuerst an der Basiskarosserie befestigt werden und anschließend das Kühleraggregat in den Aufnahmeraum eingesetzt werden. Die Montage kann allerdings auch vice versa erfolgen.

Die Steifigkeit des Frontends wird weiterhin durch das Stabilitätselement, das an der Querverstrebung lösbar befestigt ist und entweder mittelbar, beispielsweise über die Referenzstrebe, oder unmittelbar an der Basiskarosserie befestigt werden kann, festgelegt. Wie erwähnt die Querverstrebung und die seitlichen Stützelemente können für eine Vielzahl von Fahrzeugtypen dimensioniert werden. Lediglich das an der Querverstrebung lösbar befestigte Stabilitätselement ist an den jeweiligen Fahrzeugtyp bzw. die Ausgestaltung des Kühleraggregats anzupassen. Folglich lässt sich die Frontendkarosserie flexibeler für verschiedene Fahrzeugtypen und Baureihen einsetzen.

Hinzu kommt eine Bauraumoptimierung hinsichtlich des für das Kühleraggregat zur Verfügung stehenden Aufnahmeraumes. Die seitlichen Stützelemente sowie die Querverstrebung verblocken den Aufnahmeraum in Höhenrichtung der Frontendkarosserie nicht, weshalb sich die maximalen Abmessungen des Kühleraggregates in Höhenrichtung vergrößern. Das Stabilitätselement ist bevorzugt an das verbaute Kühleraggregat angepasst und verläuft unter hoher Bauraumausnutzung über das Aggregat bzw. den Aufnahmeraum.

Bevorzugt weist die erfindungsgemäße Frontendkarosserie die Referenzstrebe auf, die bestimmungsgemäß vor Montage der Frontendkarosserie an die Basiskarosserie angelehrt und an dieser befestigt wird. Das Stabilitätselement ist einerseits an der Querverstrebung und andererseits an der Referenzstrebe lösbar befestigt.

Dadurch, dass die erfindungsgemäße Frontendkarosserie die an der Basiskarosserie zu befestigende Referenzstrebe bevorzugt umfasst, kann die erfindungsgemäße Frontendkarosserie gut gegenüber der Basiskarosserie ausgerichtet und an dieser befestigt werden. Der Aufnahmeraum, in dem sich beispielsweise das Kühleraggregat nach Montage der Frontendkarosserie befindet, bleibt aufgrund der lösbaren Verbindung zwischen dem Stabilitätselement und der Querverstrebung bzw. der Referenzstrebe leicht zugänglich. Dies ist insbesondere bei einem reparaturbedingten Austausch des Kühleraggregates vorteilhaft.

Bevorzugt ist das Stabilitätselement derart strukturiert, dass das Stabilitätselement bestimmte Kraftübertragungs- und Verformungseigenschaften aufweist.

Beispielsweise kann dies bei einem plattenförmigen Stabilitätselement durch Prägen und/oder durch Ausbildung von materialmäßig stärkeren und schwächeren Bereichen erzielt werden.

Wie bereits erwähnt, kann die erfindungsgemäße Frontendkarosserie lediglich durch Austausch des Stabilitätselementes an unterschiedliche Fahrzeugtypen bzw. Baureihen angepasst werden. Hinzu kommt, dass auch Anforderungen an das Verformungsverhalten bei einem Unfall oder Anforderungen an den Fußgängerschutz gut zu erreichen sind.

Bevorzugt weist die Referenzstrebe Befestigungsabschnitte auf, an denen in einem Motorraum der Basiskarosserie verlaufende Streben befestigt werden können.

Über die weiteren an der Referenzstrebe zu befestigenden Streben können Kräfte in die Basiskarosserie eingeleitet werden, was die Stabilitätseigenschaften der Frontendkarosserie verbessert und im Hinblick auf einen zu erstrebenden Leichtbau nicht zuletzt dafür sorgt, dass verschiedne Elemente der Frontendkarosserie gewichtsmäßig leichter ausgebildet werden können.

Bevorzugt umfasst die erfindungsgemäße Frontendkarosserie ein erstes Befestigungselement und ein zweites Befestigungselement, die zur Halterung des Aggregats vorgesehen sind und die in den Aufnahmeraum verlaufen, wobei das erste und zweite Befestigungselement an dem Stabilitätselement befestigt sind. Die Befestigungselemente sind beispielsweise lösbar an dem Stabilitätselement befestigt.

Diese Art der Befestigung des Aggregats, insbesondere des Kühleraggregats, ist vorteilhaft, weil die Befestigungselemente an dem Stabilitätselement angebracht werden. Insoweit ergibt sich hieraus, dass wiederum lediglich das Stabilitätselement an verschiedene Fahrzeugtypen oder Kühleraggregate angepasst werden muss. Die anderen Elemente der erfindungsgemäßen Frontendkarosserie können unverändert bleiben.

Erfindungsgemäß ist es aber auch möglich, die Befestigungselemente an den seitlichen Stützelementen anzubringen.

Da die Befestigungselemente zur Halterung des Aggregats, insbesondere des Kühleraggregats, auch an den seitlichen Stützelementen befestigt werden können, ist es möglich, das Stabilitätselement sehr fahrzeugspezifisch auszugestalten. Es ist in diesem Fall nämlich nicht zwingend erforderlich, dass das Stabilitätselement an den Befestigungsabschnitten über dem Kühleraggregat verläuft. Dies ist insbesondere für die Verwendung der erfindungsgemäßen Frontendkarosserie bei verschiedenen Fahrzeugtypen, wie Limousinen oder SUVs, vorteilhaft.

Beispielsweise kann das Stabilitätselement eine von der Querverstrebung ausgehend V-förmig verlaufende Stabilitätsstrebe sein, die einerseits an der Querverstrebung lösbar befestigt ist und die derart dimensioniert ist, dass sie andererseits bestimmungsgemäß in einem Bereich von Federbeindomen der Basiskarosserie befestigbar ist.

Bevorzugt ist das Stabilitätselement eine M-förmig verlaufende Stabilitätsstrebe, die von der Querverstrebung ausgehend in Richtung der Federbeindome der Basiskarosserie und von dort in Richtung der vorderen Stützträger der Basiskarosserie verläuft.

Die Stabilitätsstrebe ist bevorzugt einerseits an der Querverstrebung lösbar befestigt und wird andererseits bestimmungsgemäß sowohl in dem Bereich der Federbeindome der Basiskarosserie als auch an den vorderen Stützträgern der Basiskarosserie befestigt.

Zusätzlich können die M- und V-förmigen Stabilitätsstreben auch an der Referenzstrebe befestigt sein.

Im Folgenden werden zwei bevorzugte Ausführungsformen der erfindungsgemäßen Frontendkarosserie unter Bezug auf die beigefügten Zeichnungen beschrieben werden.
**Fig. 1** zeigt eine erste bevorzugte Ausführungsform der erfindungsgemäßen Frontendkarosserie in einem montierten Zustand, wobei ein Kühleraggregat innerhalb eines Aufnahmeraumes aufgenommen ist.
**Fig. 2** zeigt die erfindungsgemäße Frontendkarosserie gemäß der ersten Ausführungsform in einem auseinandergezogenen Zustand.
**Fig. 3** zeigt einen Montagevorgang der erfindungsgemäßen Frontendkarosserie gemäß der ersten Ausführungsform, wobei das Stabilitätselement nach Heranführen der Frontendkarosserie an die Basiskarosserie befestigt wird.
**Fig. 4** zeigt einen weiteren Montagevorgang der erfindungsgemäßen Frontendkarosserie gemäß der ersten Ausführungsform, wobei das Stabilitätselement bereits vor Heranführen der Frontendkarosserie an die Basiskarosserie befestigt wurde.
**Fig. 5** zeigt einen vergrößerten Ausschnitt einer Verbindung des Stabilitätselementes mit dem darunter angeordneten Kühleraggregat.
**Fig. 6** zeigt eine zweite bevorzugte Ausführungsform der erfindungsgemäßen Frontendkarosserie.
**Fig. 7** zeigt eine Frontendkarosserie gemäß dem Stand der Technik.

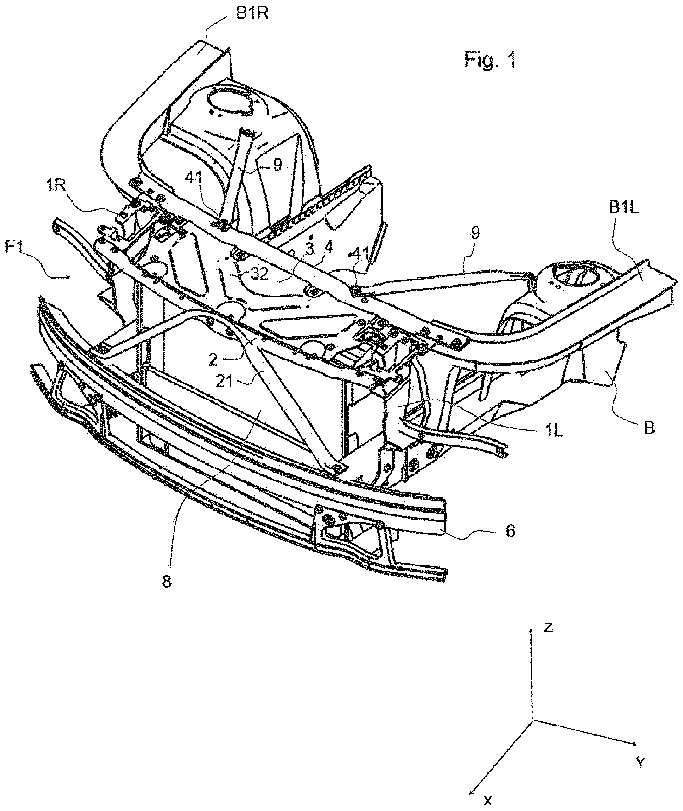

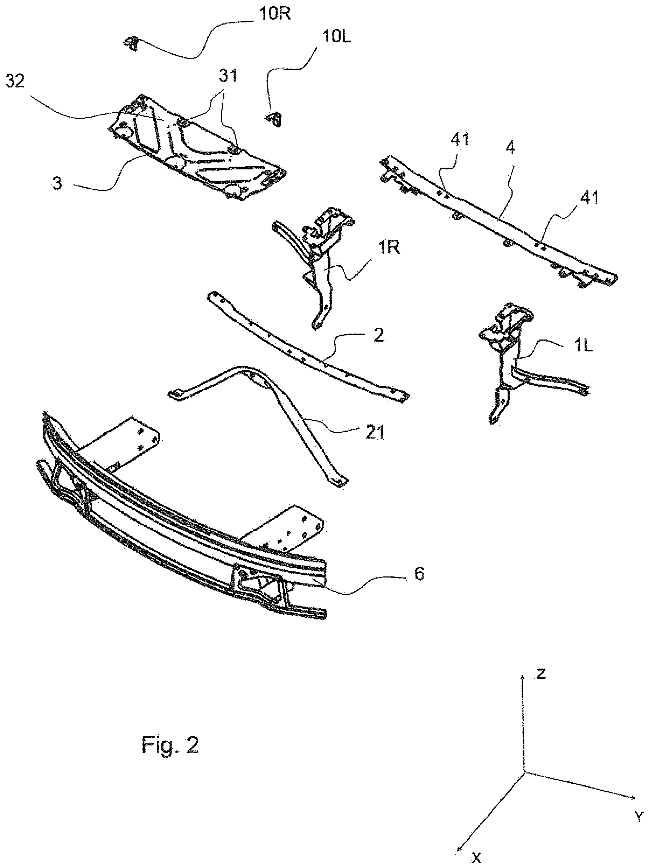

In Fig. 1 ist eine erfindungsgemäße Frontendkarosserie F1 gemäß einer ersten bevorzugten Ausführungsform der Erfindung gezeigt, die an einer Basiskarosserie B befestigt ist. Fig. 2 zeigt die Elemente der Frontendkarosserie F1 in einem auseinandergezogenen Zustand.

Die in Fig. 1 und 2 dargestellte X-Richtung entspricht der Hauptfahrtrichtung des fertigzustellenden Kraftfahrzeuges und folglich der Richtung, in die die Vorderseite der Frontendkarosserie F1 weist.

Die gezeigte Y-Richtung entspricht der Breitenrichtung des fertigzustellenden Kraftfahrzeuges bzw. der Frontendkarosserie F1, d.h. die linke Seite der Frontendkarosserie F1 weist in die positive γ-Richtung und die rechte Seite der Frontendkarosserie F1 weist in die negative γ-Richtung.

Die gezeigte Z-Richtung entspricht der Höhenrichtung des fertigzustellenden Kraftfahrzeuges bzw. der Frontendkarosserie F1. Die Oberseite der Frontendkarosserie F1 weist in diese Richtung.

Die erfindungsgemäße Frontendkarosserie F1 umfasst ein erstes auf der linken Seite der Frontendkarosserie F1 angeordnetes seitliches Stützelement 1L und ein zweites auf der rechten Seite der Frontendkarosserie F1 angeordnetes Stützelement 1R. Das erste und zweite Stützelement 1L, 1R werden mit ihrem der Basiskarosserie B zugewandten oberen Ende an einer im Folgenden noch erläuterten Referenzstrebe 4 zur Montage und Ausrichtung der Frontendkarosserie 1 befestigt.

Die in Hauptfahrtrichtung bzw. X-Richtung weisenden Enden des ersten und zweiten Stützelementes 1L, 1R sind an ihrem in Z-Richtung oberen Ende über eine Querverstrebung 2 miteinander verbunden.

Von einem zentralen Mittenabschnitt der Querverstrebung 2 ausgehend verläuft eine V-förmige Strebe 21 zu einem sich im unteren Bereich der Frontendkarosserie F1 befindenden Crash-System 6, an dem die V-förmige Strebe ebenfalls befestigt ist.

Die seitlichen Stützelemente 1L, 1R bilden zusammen mit der Querverstrebung 2 einen Aufnahmeraum aus, in dem in Fig. 1 ein Kühleraggregat 8 eines nicht dargestellten Motors aufgenommen ist.

Zur Montage bzw. Befestigung der erfindungsgemäßen Frontendkarosserie F1 wird eine Referenzstrebe 4 sowohl an einem linken Stützträger B1L als auch an einem rechten Stützträger B1R der Basiskarosserie B befestigt. Die erfindungsgemäße Frontendkarosserie F1 wird, wie in Fig. 1 gezeigt, an die Referenzstrebe 4 herangeführt und das erste und zweite seitliche Stützelement 1L, 1R mit der Referenzstrebe 4 über eine Schraubverbindung verbunden.

Wie aus dem Vorhergehenden ersichtlich ist, wird der Aufnahmeraum für das Kühleraggregat 8 durch das erste und zweite seitliche Stützelement 1L, 1R und die Querverstrebung 2 festgelegt, wobei der Aufnahmeraum in Höhenrichtung der Frontendkarosserie F1 bzw. Z-Richtung offen und nicht durch die seitlichen Stützelemente 1L, 1R und die Querverstrebung 2 verblockt ist. Insoweit kann die erfindungsgemäße Frontendkarosserie F1 unabhängig von den Abmaßen des Kühleraggregats 8 in Z-Richtung an die Basiskarosserie herangeführt und an dieser befestigt werden. Aus diesem Grund lässt sich die Frontendkarosserie F1 für verschiedene Fahrzeugtypen bzw. Baureihen in Unabhängigkeit von dem Kühleraggregat 8 verwenden.

Wie aus Figs. 1 und 2 ersichtlich ist, wird der Aufnahmeraum gemäß der ersten Ausführungsform der erfindungsgemäßen Frontendkarosserie F1 von einem plattenförmigen Stabilitätselement 3 überspannt, das einerseits an der Querverstrebung 2 und andererseits an der Referenzstrebe 4 über Schraubverbindungen 31 lösbar befestigt ist.

Das Stabilitätselement 3 ist bevorzugt derart dimensioniert und strukturiert, dass es ein bestimmtes Kraftübertragungsverhalten zwischen der Querverstrebung 2 und der Referenzstrebe 4 aufweist. Wie in Figs. 1 und 2 dargestellt ist, weist das plattenförmige Stabilitätselement 3 einen V-förmigen Bereich 32 auf, der durch Prägen und/oder durch Ausbildung von materialmäßig stärkeren und schwächeren Bereichen ausgebildet ist. Kräfte, die in negativer X-Richtung, z.B. bei einem Unfall, auf die Frontendkarosserie F1 wirken, werden über das Stabilitätselement 3 und mittelbar über die Referenzstrebe 4 in die Basiskarosserie B seitlich eingeleitet.

In Abhängigkeit von dem Fahrzeugtyp, beispielsweise Limousine oder SUV, wird diese Strukturierung des Stabilitätselementes 3 derart ausgebildet, dass die Frontendkarosserie auch bestimmte Anforderungen, beispielsweise an den Fußgängerschutz, erfüllt,

Zur Erhöhung und Verbesserung der Krafteinleitung einer auf die Frontendkarosserie F1 wirkenden Kraft in die Basiskarosserie B können noch zusätzliche Streben 9 vorgesehen sein. Die Streben 9 sind einerseits an Befestigungsabschnitten 41 der Referenzstrebe 4 und andererseits in Bereichen der Federbeindome der Basiskarosserie B befestigt.

Wie aus der vorhergehenden Beschreibung ersichtlich wird, kann die erfindungsgemäße Frontendkarosserie F1 für viele Fahrzeugtypen und Baureihen zum Einsatz kommen, ohne dass gravierende Veränderungen der einzelnen Elemente notwendig wären. Lediglich das Stabilitätselement 3 muss in Abhängigkeit von der Dimensionierung des Kühleraggregates und der notwendigen Stabilitätseigenschaften angepasst werden.

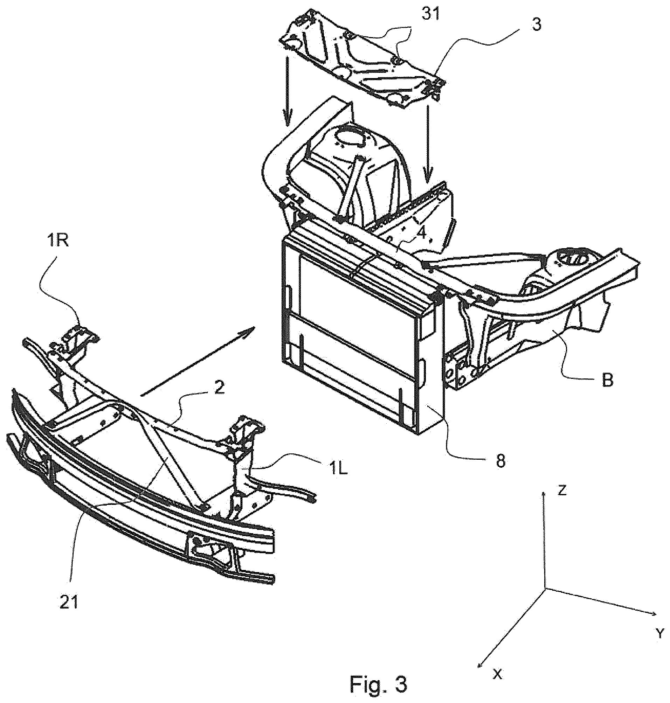

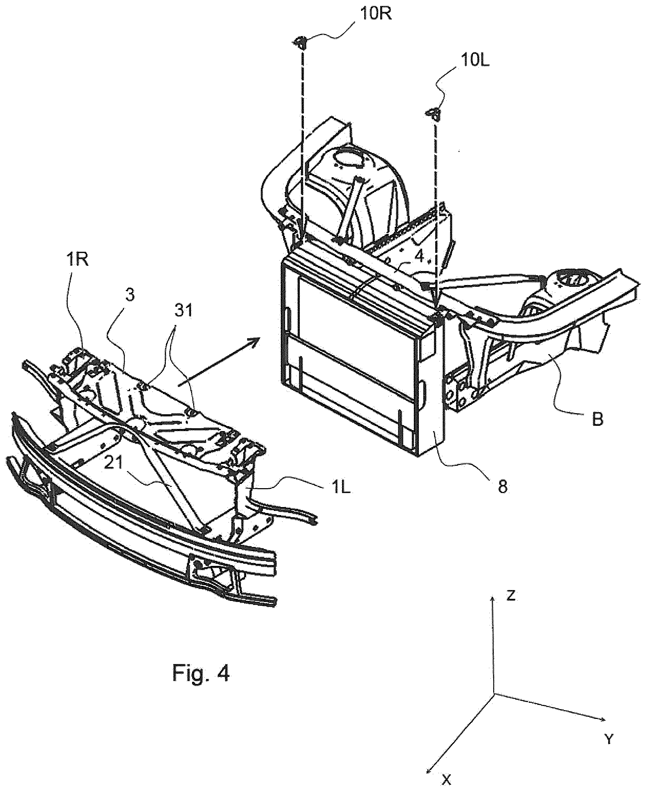

Im Übrigen ergeben sich auch erhebliche Vorteile bei der Montage der erfindungsgemäßen Frontendkarosserie, was unter Bezug auf Figs. 3 und 4 erläutert werden wird.

Wie in Fig. 3 ersichtlich ist, kann die Frontendkarosserie F1 ohne befestigtes Stabilitätselement 3 an die Basiskarosserie B derart herangeführt werden, dass das erste und zweite seitliche Stützelement 1L, 1R und die Querverstrebung 2 das dargestellte Kühleraggregat 8 umgeben bzw. umlaufen. Allgemein müsste zu diesem Zeitpunkt das Kühleraggregat 8 noch nicht montiert sein. Es ist durchaus möglich, die Frontendkarosserie F1 ohne befestigtes Stabilitätselement 3 an die Basiskarosserie B heranzuführen und anschließend das Kühleraggregat 8 in den in Z-Richtung offenen bzw. nicht verblockten Aufnahmebereich einzusetzen.

Nachdem das erste und zweite seitliche Stützelement 1L, 1R an der Referenzstrebe 4 befestigt worden sind und sich das Kühleraggregat 8 in dem Aufnahmebereich befindet, kann anschließend das Stabilitätselement 3 an der Querverstrebung 2 und der Referenzstrebe 4 über Schraubverbindungen 31 befestigt werden.

Letztendlich wird das Kühleraggregat 8 noch mit Befestigungselementen 10L, 10R, die später erläutert werden, an dem Stabilitätselement 3 befestigt.

Im Gegensatz zu den unter Bezug auf Fig. 3 beschriebenen Montageschritten kann die erfindungsgemäße Frontendkarosserie F1 auch wie folgt montiert werden.

In Fig. 4 ist die Frontendkarosserie F1 mit befestigtem Stabilitätselement 3 gezeigt. An der Basiskarosserie B ist wiederum bereits das Kühleraggregat 8 montiert, wobei dieses in Z-Richtung derart dimensioniert ist, dass die Frontendkarosserie F1 mit befestigtem Stabilitätselement 3 an die Basiskarosserie B herangeführt werden kann.

Wenn die Frontendkarosserie F1 an die Basiskarosserie B herangeführt worden und das Kühleraggregat 8 in dem Aufnahmeraum der Frontendkarosserie F1 aufgenommen ist, können die seitlichen Stützelemente 1L, 1R und das Stabilitätselement 3 an der Referenzstrebe 4 der Frontendkarosserie F1 über die Schraubverbindungen befestigt werden.

In einem weiteren Montageschritt wird das Kühleraggregat 8 mit den Befestigungselementen 10 an dem Stabilitätselement 3 befestigt.

Wie aus den unter Bezug auf Figs. 3 und 4 beschriebenen Montageschritten ersichtlich wird, kann die Frontendkarosserie F1 in Abhängigkeit von der Dimensionierung des Kühleraggregates 8 unterschiedlich montiert werden, weshalb sich keine notwendigen Anpassungen einer Fertigungsstraße zur Herstellung verschiedener Fahrzeugtypen hinsichtlich des Montagezeitpunktes des Kühleraggregates 8 oder der Frontendkarosserie F1 ergeben, wenn die Kühleraggregate fahrzeugspezifisch unterschiedlich ausgebildet sind.

Außerdem ist die erfindungsgemäße Frontendkarosserie auch dahingehend vorteilhaft, dass ein reparaturbedingter Austausch des Kühleraggregates leicht durch Entfernen des Stabilitätselementes 3 durchgeführt werden kann.

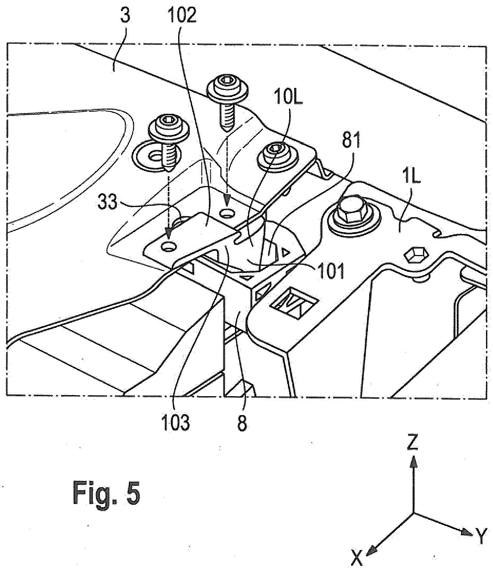

In Fig. 5 ist eine vergrößerte Teilansicht der linken Oberseite der Frontendkarosserie F1 gezeigt, wobei die linke Verbindung zwischen dem Stabilitätselement 3 und dem Kühleraggregat 8 gut erkennbar ist.

Das Befestigungselement 10L umfasst einen verlängerten Abschnitt 101, der in eine korrespondierende Aufnahme 81 des Kühleraggregats 8 eingesetzt ist. Auf der dem Stabilitätselement 3 zugeordneten oberen Seite umfasst das Befestigungselement 10L einen T-förmigen Ansatz 102. Ein sich verjüngender Abschnitt 103 des T-förmigen Ansatzes 102 ist in einen in dem Stabilitätselement 3 gebildeten Schlitz 33 eingesetzt, wodurch das Stabilitätselement 3 mit dem Befestigungselement 10L ineinandergreift. Zur Fixierung des Befestigungselementes 10L an dem Stabilitätselement 3 sind, wie in Fig. 5 gezeigt, zwei Schraubverbindungen vorgesehen.

Zum Lösen des Stabilitätselementes 3 bzw. des Befestigungselementes 10L kann das Befestigungselement 10L in der Aufnahme 81 gegenüber dem Stabilitätselement 3 seitlich versetzt werden, wodurch der in dem Stabilitätselement 3 gebildete Schlitz 33 den sich verjüngenden Abschnitt 103 des Befestigungselementes 10L freigibt.

Das Befestigungselement 10R und der entsprechende Schlitz 33 der rechten Seite der Frontendkarosserie F1 sind identisch aufgebaut.

Wie aus der Erläuterung zu Fig. 5 ersichtlich ist, kann das Befestigungselement 10L leicht entweder nach Befestigung des Stabilitätselementes 3 oder vor der Befestigung des Stabilitätselementes 3 an diesem befestigt werden, weshalb die unter Bezug auf Figs. 3 und 4 beschriebenen Montageschritte ohne Weiteres durchgeführt werden können.

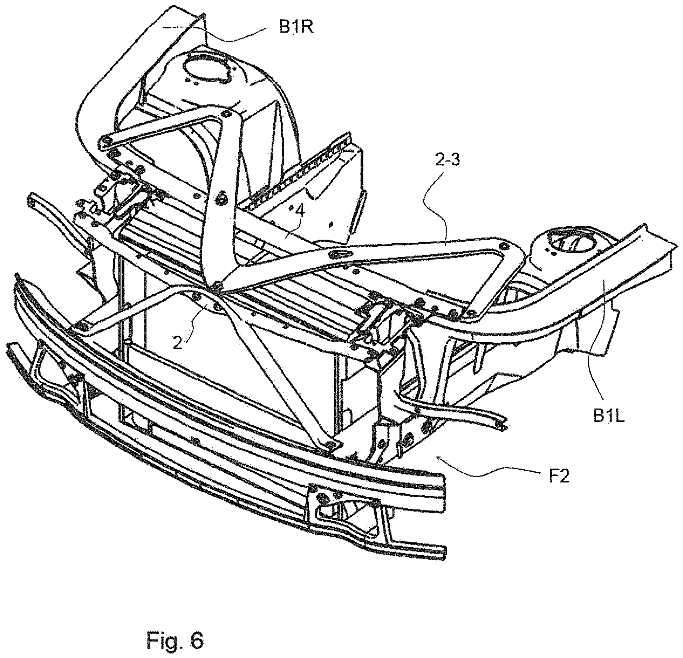

Unter Bezug auf Fig. 6 wird eine zweite bevorzugte Ausführungsform der erfindungsgemäßen Frontendkarosserie beschrieben werden. Die Frontendkarosserie F2 gemäß der zweiten bevorzugten Ausführungsform der Erfindung ist mit der der ersten bevorzugten Ausführungsform bis auf die Ausbildung des Stabilitätselementes und der Befestigungselemente identisch, weshalb die übereinstimmenden Elemente nicht nochmals erläutert werden.

In der zweiten bevorzugten Ausführungsform ist das Stabilitätselement als eine Stabilitätsstrebe 2-3 ausgebildet. Die Stabilitätsstrebe 2-3 ist M-förmig und an dem Mittenabschnitt der Querverstrebung 2 befestigt. Von dem Mittenabschnitt ausgehend verläuft die Stabilitätsstrebe 2-3 in Richtung der Bereiche der Federbeindome und von diesen Bereichen zu den vorderen Stützträgern B1L, B1R der Basiskarosserie B.

Auf Seiten der Basiskarosserie B wird die Stabilitätsstrebe 2-3 an der Referenzstrebe 4, in dem Bereich der Federbeindome und an den Stützträgern B1L, B1R befestigt, bevorzugt durch Schraubverbindungen.

Da die Stabilitätsstrebe 2-3 bei der zweiten bevorzugten Ausführungsform nicht über die Aufnahmen 81 des Kühleraggregates 8 verlaufen, sind die Befestigungselemente 10L, 10R an den seitlichen Stützelementen 1L, 1R festgeschraubt.

Bevorzugt sind die Stabilitätselemente 3, 2-3 der ersten und zweiten bevorzugten Ausführungsform aus einem Faser-Kunststoff-Verbundwerkstoff und/oder einer Metalllegierung, wie zum Beispiel einer Aluminiumlegierung ausgebildet.

Die anderen verleibenden Elemente sind bevorzugt aus einer Metalllegierung, insbesondere einer Aluminiumlegierung gebildet.

## Patentansprüche

1. Frontendkarosserie (F1, F2) für den Aufbau eines Frontends eines Kraftfahrzeuges, wobei die Frontendkarosserie (F1, F2) aufweist:
ein erstes seitliches Stützelement (1L) und ein zweites seitliches Stützelement (1R), die an einer an einer Basiskarosserie (B) vorgesehenen Referenzstrebe (4) zur Ausrichtung der Frontendkarosserie (F1, F2) an der Basiskarosserie (B) befestigbar sind,
**dadurch gekennzeichnet, dass** sie ferner aufweist:
eine Querverstrebung (2), die das erste seitliche Stützelement (1L) und das zweite seitliche Stützelement (1R) derart verbindet, dass zwischen dem ersten seitlichen Stützelement (1L) und dem zweiten seitlichen Stützelement (1R) ein in Höhenrichtung der Frontendkarosserie (F1, F2) offener Aufnahmeraum zur Aufnahme eines Aggregats, insbesondere eines Kühleraggregats 8, ausgebildet ist, und
ein Stabilitätselement (3), das einerseits an der Querverstrebung (2) lösbar befestigt ist und andererseits an der Basiskarosserie (B) mittelbar oder unmittelbar befestigt werden kann.

2. Frontendkarosserie (F1, F2) gemäß Anspruch 1, welche weiterhin aufweist:
die Referenzstrebe (4), die bestimmungsgemäß vor Montage der Frontendkarosserie (F1, F2) an der Basiskarosserie (B) befestigt wird, wobei
das Stabilitätselement (3) einerseits an der Querverstrebung (2) und andererseits an der Referenzstrebe (4) lösbar befestigt ist.

3. Frontendkarosserie (F1, F2) gemäß Anspruch 1 oder 2, wobei
das Stabilitätselement (3) derart strukturiert ist, dass das Stabilitätselement (3) bestimmte Kraftübertragungseigenschaften aufweist.

4. Frontendkarosserie (F1, F2) gemäß Anspruch 1, 2 oder 3, wobei
die Referenzstrebe (4) Befestigungsabschnitte (41) aufweist, an denen in einem Motorraum der Basiskarosserie (B) verlaufende Streben (9) befestigbar sind.

5. Frontendkarosserie (F1, F2) gemäß einem der Ansprüche 2 bis 4, welche weiterhin aufweist:
ein erstes Befestigungselement (10L) und ein zweites Befestigungselement (10R), die zur Halterung des Aggregats (8) vorgesehen sind und in den Aufnahmeraum verlaufen, wobei
das erste und zweite Befestigungselement (10L, 10R) an dem Stabilitätselement (3) befestigt sind.

6. Frontendkarosserie (F1, F2) gemäß einem der Ansprüche 2 bis 4, welche weiterhin aufweist:
ein erstes Befestigungselement (10L) und ein zweites Befestigungselement (10R), die zur Halterung des Aggregats (8) vorgesehen sind und in den Aufnahmeraum verlaufen, wobei
das erste und zweite Befestigungselement (10L, 10R) an den seitlichen Stützelementen (1L, 1R) befestigt sind.

7. Frontendkarosserie (F1, F2) gemäß Anspruch 1 oder 2, wobei
das Stabilitätselement (3) eine M-förmig verlaufende Stabilitätsstrebe (2-3) ist.

8. Frontendkarosserie (F1, F2) gemäß Anspruch 7, wobei
die Stabilitätsstrebe (2-3) an der Querverstrebung (2) lösbar befestigt ist und derart dimensioniert ist, dass sie bestimmungsgemäß in einem Bereich von Federbeindomen der Basiskarosserie (B) und an vorderen seitlichen Stützträgern (1BL, 1BR) befestigbar ist.

9. Frontendkarosserie (F1, F2) gemäß Anspruch 9, welche weiterhin aufweist:
ein erstes Befestigungselement (10L) und ein zweites Befestigungselement (10R), die zur Halterung des Aggregats (8) vorgesehen sind und in den Aufnahmeraum verlaufen, wobei
das erste und zweite Befestigungselement (10L, 10R) an den seitlichen Stützelementen (1L, 1R) befestigt sind.

## Claims

1. A front end body (F1, F2) for constructing a front end of a motor vehicle, wherein the front end body (F1, F2) has:
a first lateral supporting element (1 L) and a second lateral supporting element (1 R) which can be fastened to a reference strut (4), provided on a base body (B), to align the front end body (F1, F2) on the base body (B),
**characterised in that** it further comprises:
a transverse strut (2) which connects the first lateral supporting element (1 L) and the second lateral supporting element (1 R) such that formed between the first lateral supporting element (1 L) and the second lateral supporting element (1 R) is a receiving space, which is open in the vertical direction of the front end body (F1, F2), for receiving a unit, especially a radiator unit (8), and
a stability element (3) which is fastened releasably at one end to the transverse strut (2) and which at the other end can be fastened indirectly or directly to the base body (B).

2. A front end body (F1, F2) according to claim 1, which further has:
the reference strut (4), which is fastened as intended to the base body (B) before the front end body (F1, F2), is assembled, wherein
the stability element (3) is fastened releasably at one end to the transverse strut (2) and at the other end to the reference strut (4).

3. A front end body (F1, F2) according to claim 1 or claim 2, wherein
the stability element (3) is structured such that the stability element (3) has defined force transmission characteristics.

4. A front end body (F1, F2) according to claim 1, claim 2 or claim 3,
wherein the reference strut (4) has fastening portions (41), to which struts (9) which extend in an engine compartment of the base body (B), can be fastened.

5. A front end body (F1, F2) according to any one of claims 2 to 4, which further has:
a first fastening element (10L) and a second fastening element (10R) which are provided for holding the unit (8) and which extend in the receiving space, wherein
the first and second fastening elements (10L, 10R) are fastened to the stability element (3).

6. A front end body (F1, F2) according to any one of claims 2 to 4, which further has:
a first fastening element (10L) and a second fastening element (10R) which are provided for holding the unit (8) and which extend in the receiving space, wherein
the first and second fastening elements (10L, 10R) are fastened to the lateral supporting elements (1 L, 1 R).

7. A front end body (F1, F2) according to claim 1 or claim 2, wherein
the stability element (3) is a stability strut (2-3) which extends in an M shape.

8. A front end body (F1, F2) according to claim 7, wherein
the stability strut (2-3) is fastened releasably to the transverse strut (2) and is configured such that it can be fastened as intended in a region of suspension strut domes of the base body (B) and to front lateral supporting members (1BL, 1BR).

9. A front end body (F1, F2) according to claim 9, which further has:
a first fastening element (10L) and a second fastening element (10R) which are provided for holding the unit (8) and which extend in the receiving space, wherein
the first and second fastening elements (10L, 10R) are fastened to the lateral supporting elements (1 L, 1 R).

## Revendications

1. Composant de carrosserie frontal (F1, F2) destiné au montage de l'avant d'un véhicule, ce composant de carrosserie frontal (F1, F2) comprenant :
un premier élément de support latéral (1L) et un second élément de support latéral (1R) pouvant être fixés à une entretoise de référence (4) située sur un composant de carrosserie de base (B) pour permettre d'orienter le composant de carrosserie frontal (F1, F2) sur le composant de carrosserie de base (B),
**caractérisé en ce qu'**
il comporte en outre :
une traverse (2) qui relie le premier élément de support latéral (1L) et le second élément de support latéral (1R) de sorte que soit formé entre le premier élément de support latéral (1L) et le second élément de support (1R) un volume de réception ouvert dans la direction de la hauteur du composant de carrosserie frontal (F1, F2) pour permettre la réception d'un ensemble, en particulier d'un ensemble de radiateur (8), et
un élément de stabilisation (3) qui, d'une part, est fixé de façon amovible sur la traverse (2) et d'autre part, peut être fixé directement ou indirectement sur le composant de base (B) de la carrosserie.

2. Composant de carrosserie frontal (F1, F2) conforme à la revendication 1, comprenant en outre :
l'entretoise de référence (4) qui est fixée sur le composant de base de la carrosserie (B) conformément à la configuration avant le montage du composant de carrosserie frontal (F1, F2),
l'élément de stabilisation (3) étant fixé de manière amovible d'une part sur la traverse (2) et d'autre part, sur l'entretoise de référence (4).

3. Composant de carrosserie frontal (F1, F2) conforme à la revendication 1 ou 2,
dans lequel l'élément de stabilisation (3) a une structure telle que cet élément (3) présente des caractéristiques de transmission de charge définies.

4. Composant de carrosserie frontal (F1, F2) conforme à la revendication 1 ou 2 ou 3,
dans lequel l'entretoise de référence (4) comprend des segments de fixation (41) sur lequel peuvent être fixées des entretoises (9) s'étendant dans le volume moteur du composant de base (B) de la carrosserie.

5. Composant de carrosserie frontal (F1, F2) conforme à l'une des revendications 2 à 4, comprenant en outre :
un premier élément de fixation (10L) et un second élément de fixation (10R) qui sont prévus pour permettre le maintien de l'ensemble (8) et s'étendent dans le volume de réception, et
le premier et le second éléments de fixation (10L, 10R) sont fixés sur l'élément de stabilisation (3).

6. Composant de carrosserie frontal (F1, F2) conforme à l'une des revendications 2 à 4,
comprenant en outre :
un premier élément de fixation (10L) et un second élément de fixation (10R) qui sont prévus pour permettre le maintien de l'ensemble (8) et s'étendent dans le volume de réception, et
le premier et le second éléments de fixation (10L, 10R) sont fixés sur les éléments de support latéraux (1L, 1R).

7. Composant de carrosserie frontal (F1, F2) conforme à la revendication 1 ou 2,
dans lequel l'élément de stabilisation (3) est constitué par une entretoise de stabilisation (2, 3) s'étendant en forme de (M).

8. Composant de carrosserie frontal (F1, F2) conforme à la revendication 7,
dans lequel l'entretoise de stabilisation (2, 3) est fixée de manière amovible sur la traverse (2) et est dimensionnée de façon à pouvoir être fixée conformément à la configuration dans une zone de dôme de jambe de suspension élastique du composant de base (B) de la carrosserie et sur des supports latéraux avant (1BL, 1BR).

9. Composant de carrosserie frontal (F1, F2) conforme à la revendication 9,
comprenant en outre :
un premier élément de fixation (10L) et un second élément de fixation (10R) qui sont prévus pour permettre le maintien de l'ensemble (8) et s'étendent dans le volume de réception, et
le premier et le second éléments de fixation (10L, 10R) sont fixés sur les éléments de support latéraux (1L, 1R).
